# EUROPEAN PATENT SPECIFICATION

(11) **EP 2 006 192 B1**
(45) Date of publication and mention of the grant of the patent: **19.08.2009**
(21) Application number: 08010358.3
(22) Date of filing: 06.06.2008
(51) Int. Cl.: B62D 25/24

(54) **Vehicle body panel**
Fahrzeugaufbauplatte
Panneau de carosserie de véhicule

(30) Priority: 21.06.2007 JP 2007163447
(43) Date of publication of application: 24.12.2008
(73) Proprietor: Honda Motor Co., Ltd., Minato-ku Tokyo 107-8556 (JP)
(72) Inventor: Horiguchi, Jun c/o Honda R&D Co., Ltd., Wako-shi, Saitama, 351-0193 (JP); Matsunaga, Koji, c/o Honda Access Corp., Niiza-shi, Saitama 352-8589 (JP)
(74) Representative: Herzog, Markus

(56) References cited:
- DE-A1-1102004 006 84
- US-A- 5 511 813

## Description

### TECHNICAL FIELD

The present invention relates to a vehicle body panel, and in particular to a vehicle body panel including a part that can be readily removed so as to form an opening as required even after the body panel is assembled to a vehicle body.

### BACKGROUND OF THE INVENTION

Generally, a tow hook is provided in a front part or rear part of a vehicle for towing another vehicle or being towed by another vehicle. In addition to such a tow hook, a motor vehicle is often fitted with a trailer hitch for towing a camping trailer, a transport trailer such as those for towing a boat or jet ski. Such tow hooks and trailer hitches are typically directly attached to vehicle body frames having a high rigidity so as to withstand the large load applied to the hook or hitch as the case may be by the vehicle to be towed and (by the vehicle in question when the vehicle itself is to be towed).

US 5511813 discloses a hitch assembly for connecting a towed vehicle to a towing vehicle having a pair of longitudinally extending frame portions. The hitch assembly is attachable to a selected vehicle of a group of towing vehicles having frame portions spaced apart a variety of different widths. The hitch assembly includes a pair of end members. Each end member has an attachment connectable with a respective frame portion of the towing vehicle and a support fixed to the attachment. Each attachment has a plurality of elongate openings each for receiving a fastener to attach its end member to the frame portion of the towing vehicle. At least one of the attachment elongate openings in each attachment extends in a direction parallel to the support. At least one of the elongate transverse openings extends in a direction perpendicular to the support. The support has at least one elongate transverse opening extending in a direction parallel to the length of the support and a transverse circular opening. An intermediate member defining a longitudinally extending opening. The intermediate member opening receives a support of a respective end member in a telescoping relationship. The intermediate member has a length .less than the smallest width between frame portions of the numerous towing vehicles. The intermediate member includes at least one transverse opening which extends transversely through a portion of said intermediate member to receive a fastener extending through a traverse opening in the support to connect the intermediate member to the support.

A front part of the vehicle is often provided with a crash portion (impact absorbing portion). As the tow hook extends most away from the vehicle body than any other part, it is often subjected to the impact load before any other part of the vehicle body. Therefore, there is a need to mount the tow hook in such a way that the tow hook does not diminish the effectiveness of the crash portion at the time of an impact and at the same time does not protrude excessively from the outer profile of the vehicle body. To meet such a need, a previously proposed tow hook comprises a hook mount which is fixedly attached to a front end of a front frame of a vehicle, a curved portion which depends from a lower end of the hook mount and curves toward the vehicle and an engagement portion which extends away from the vehicle. See Japanese patent laid open publication No. 10-7032.

The previously proposed tow hook can be mounted on the outer end of the crash portion so as not to interfere with the operation of the crash portion at the time of a crash but does not excessively protrude outwardly from the vehicle body owing to the provision of the curved portion.

Such a tow hook is typically provided in all of the vehicles, but a trailer hitch is often optional. Some vehicles of a particular model may be fitted with a trailer hitch but others may not be fitted with a trailer hitch. Oftentimes, a trailer hitch is retrofitted to a vehicle which is already put in use. When mounting a trailer hitch, as it has to be mounted in a adequately rigid part of the vehicle, a frame member such as a rear side frame is selected for such a purpose, but it is often closed by an outer panel such as a rear panel. Therefore, to mount a hitch to a frame member, and an opening is required to be formed in the outer panel. However, it is highly difficult to form an opening in a panel member which is already assembled to the vehicle body. Therefore, it has been customary that an opening is formed in the outer panel of each vehicle without regard to the need for a trailer hitch. In some cases, such an opening may be closed by a lid made of plastic material.

However, in any case, if a trailer hitch is not required, such an opening merely reduces the mechanical strength of the outer panel, and serves no useful purpose. Therefore, the outer panel must be designed to have an adequate mechanical strength without regard to the presence or absence of such an opening. Therefore, if the outer panel is to have a required mechanical strength when such an opening is formed, the outer panel is required to be reinforced by using an increased amount of material or increasing the thickness of the outer panel.

### BRIEF SUMMARY OF THE INVENTION

In view of such problems of the prior art, a primary object of the present invention is to provide a vehicle body panel which can be formed with an opening only when required, and is otherwise given with a high mechanical strength owing to the absence of such an opening.

A second object of the present invention is to provide a vehicle body panel which can be easily formed with an opening even when the vehicle body panel is assembled to the vehicle body.

According to the present invention, such objects can be accomplished by providing a vehicle body panel through which an opening may be formed as an option, comprising: a panel member including a plurality of slots arranged along an imaginary line defining the optional opening; and a guide feature for guiding a hole opening tool is provided between each selected pair of slots.

Thereby, when the optional opening is absent, the panel member is free from an opening which does not serve any useful purpose other than reducing the mechanical strength and rigidity of the panel member, and is enabled to retain a substantially same mechanical strength and/or rigidity as having no opening or nor arrangement for forming an optional opening. Therefore, the provision of the arrangement for forming the optional opening does not substantially add to the weight of the vehicle body. By forming drill holes around the guide features using them as a guide so as to connect all of the slots, the optional opening can be readily formed even when the panel member is already assembled to the vehicle body. If desired, a reinforcing arrangement may be made only when the optional opening is formed.

Typically, each slot is given with an elongated track shape which extends along the edge of the optional opening. To smoothly connect the edge of the optional opening formed by the drill holes with the edge of the optional opening formed by the slots and minimize the ruggedness of the edge of the optional opening, each slot may be given with an elongated curved track shape or a kidney shape. For a similar reason, each guide feature may be provided inside the imaginary line defining the optional opening.

The guide feature typically consists of dimples, but may also consist of small holes or slits as long as they can be used as a centering guide for a hole forming tool. In a preferred embodiment of the present invention, the panel member comprises a rear panel, and the opening provides an access for mounting a trailer hitch to a side frame disposed in front of the rear panel.

Provided is a vehicle body panel which can be formed with an opening only when required, and is otherwise given with a high mechanical strength owing to the absence of such an opening. The body panel includes a plurality of slots arranged along an imaginary line defining the optional opening, and a guide feature for guiding a hole opening tool is provided between each selected pair of slots. When the optional opening is absent, the panel is free from an opening which does not serve any useful purpose other than reducing the mechanical strength and rigidity of the panel, and is enabled to retain a substantially same mechanical strength and/or rigidity as having no opening or nor arrangement for forming an optional opening. Therefore, the provision of the arrangement for forming the optional opening does not substantially add to the weight of the vehicle body. The optional opening can be readily formed by forming drill holes that connect the slots one another by using the guide feature such as dimples as a guide.

### BRIEF DESCRIPTION OF THE DRAWINGS

Now the present invention is described in the following with reference to the appended drawings, in which:
Figure 1 is a partly broken away rear perspective view of a motor vehicle to which the present invention is applied;
Figure 2 is a fragmentary rear perspective view showing a trailer hitch mounting structure embodying the present invention;
Figure 3 is an enlarged rear perspective view of a part indicated by III in Figure 2;
Figure 4 is a front view of the rear panel before the trailer hitch is mounted;
Figure 5 is an enlarged front view showing a part indicated by V in Figure 4;
Figure 6A is a view similar to Figure 5 showing the procedure for forming an opening in the rear panel;
Figure 6B is a view similar to Figure 6A showing the state where the opening is finally formed;
Figure 7 is a view similar to Figure 5 showing a modified embodiment of the present invention; and
Figure 8 is a view similar to Figure 5 showing another modified embodiment of the present invention.

### DETAILED DESCRIPTION OF THE PREFERRED EMBODIMENTS

An embodiment of the present invention is described in the following with reference to the appended drawings.

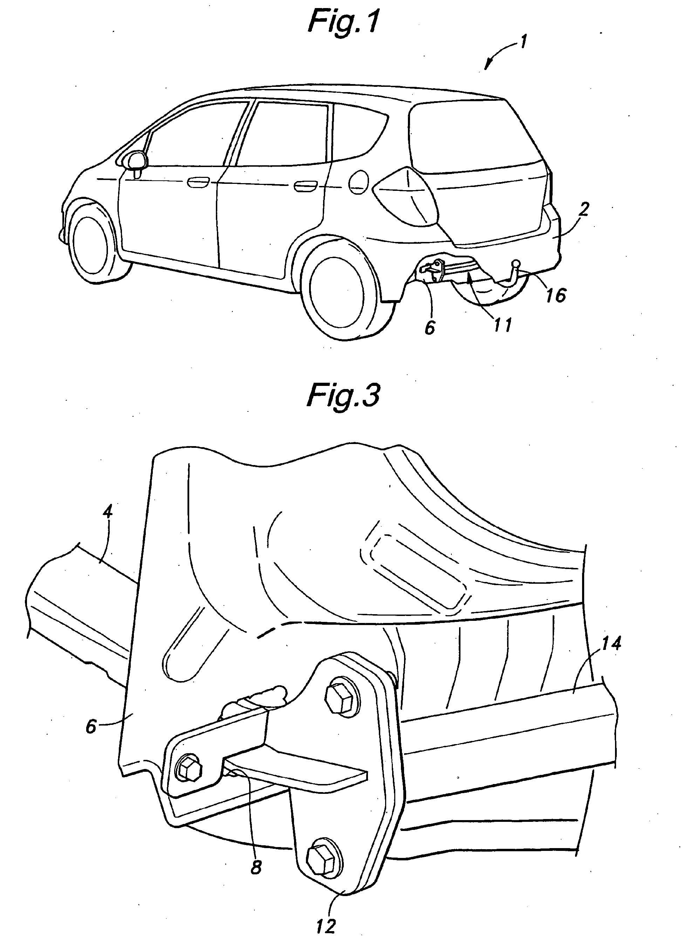

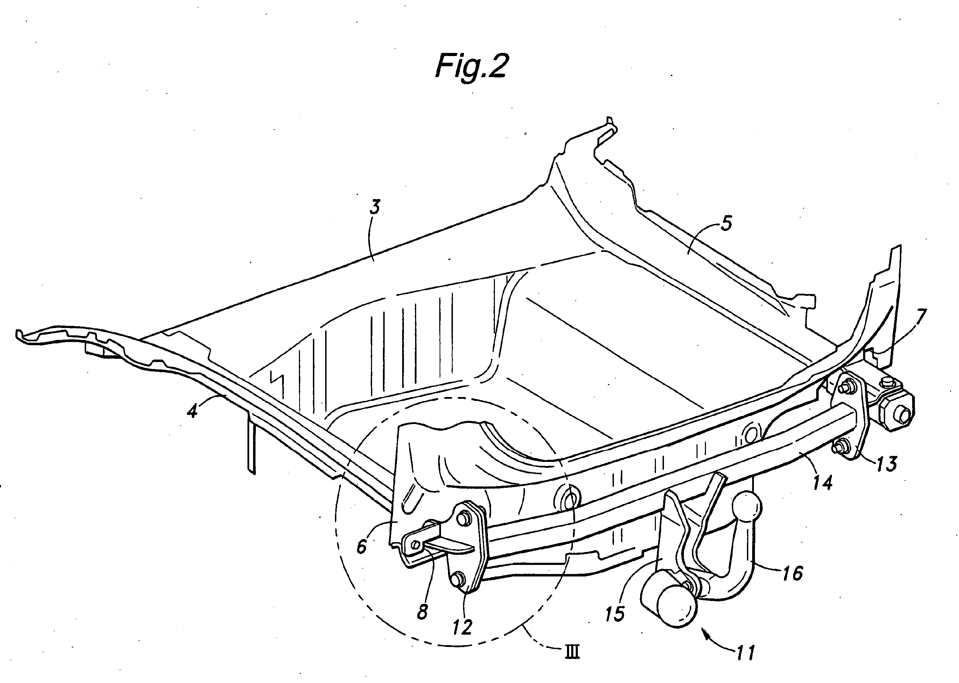

Referring to Figures 1 and 2, a motor vehicle 1 embodying the present invention is provided with a trailer hitch 11 in a rear end thereof, and a hitch ball member 16 for engaging a vehicle to be hitched extends rearward from under a rear bumper 2. A rear part of the vehicle body includes a rear cross member 3 extending in a lower part of the vehicle body along the front edge of a trunk room, and a pair of rear side frames 4 and 5 extending rearward from either lateral end of the rear cross member 3. A rear panel 6 extends across the rear ends of the rear side frames 4 and 5, and the rear bumper 2 extends laterally at a small distance from the rear side of the rear panel 6.

A trailer hitch assembly 11 is also attached across the rear ends of the rear side frames 4 and 5, and is in most part concealed behind the rear bumper 2. The trailer hitch assembly 11 includes a hitch cross member 14 consisting of a pipe having a rectangular cross section, a pair of hitch mounts 12 and 13 joining the two ends of the hitch cross member 14 to the rear ends of the corresponding rear side frames 4 and 5, a ball mount 15 depending from a middle part of the hitch cross member 14 and the aforementioned hitch ball member 16 supported by the ball mount 15 and extending rearward. Because the trailer hitch assembly 11 is subjected to a significant load when towing an object to be towed, the hitch mounts 12 and 13 are directly attached to the corresponding rear side frames 4 and 5 having a high rigidity.

Figure 3 shows the left hitch mount 12 in an enlarged scale. The hitch cross member 14 extends in a rearwardly spaced relationship with respect to the rear panel 6 so that the hitch mount 12 includes a part that is passed through an opening 8 provided in the rear panel 6. The front end of the hitch mount 12 is passed into this opening 8 and is connected to the rear end of the corresponding rear side frame 4 inside the rear panel 6 by using threaded bolts (not shown in the drawings) in a per se known manner.

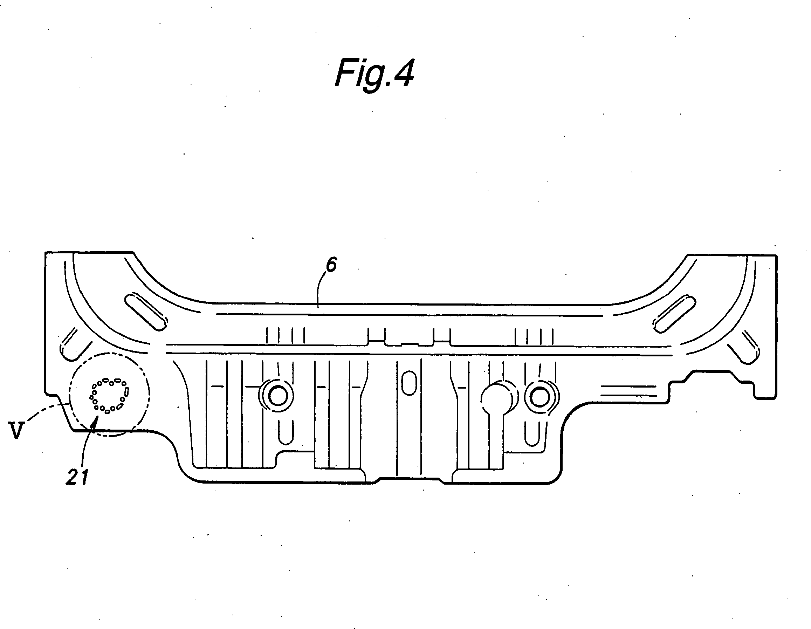

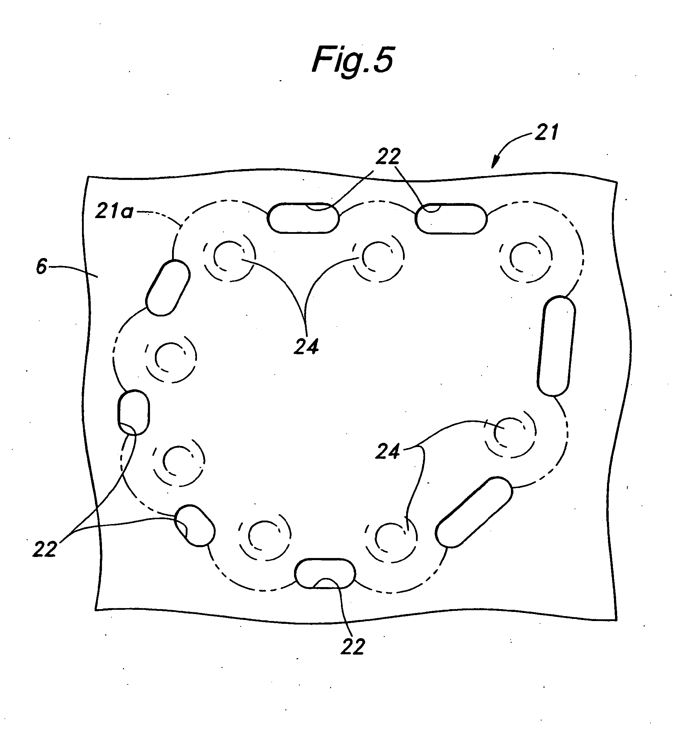

Figure 4 shows a front view (as seen from the rear end of the vehicle body) of the rear panel 6 before the trailer hitch 11 is mounted, and Figure 5 shows a part of Figure 4 indicated by a circle V in Figure 4 in an enlarged scale. Figures 4 and 5 show the rear panel 6 before the opening 8 is formed, and the part where the opening 8 may be optionally formed or opening forming part is denoted with numeral 21.

As shown in Figure 5, the opening forming part 21 includes a plurality of slots 22 arranged along an imaginary line 21a, that defines the edge of the opening 8 to be formed, at a regular interval with each long side of the slot extending along the imaginary line 21a. A dimple 24 is formed in a mid point between each pair of adjacent slots 22. In the illustrated embodiment, each dimple 24 is set back toward the center of the opening 8 to be formed by a certain distance. More specifically, the position of each dimple 24 is determined in such a manner that a drill hole of a prescribed radius centered around the dimple 24 cuts through the adjacent slots 22.

Therefore, when a drill hole of the prescribed radius is formed around each dimple 24, all of the slots 22 are connected by the drilled holes, and the opening 8 is formed as defined by the imaginary line 21a and slots 22 after a piece of sheet metal is removed from the central part of the opening forming part 21. The dimples 24 as well as slots 24 may be formed at the time of stamp forming the rear panel 6.

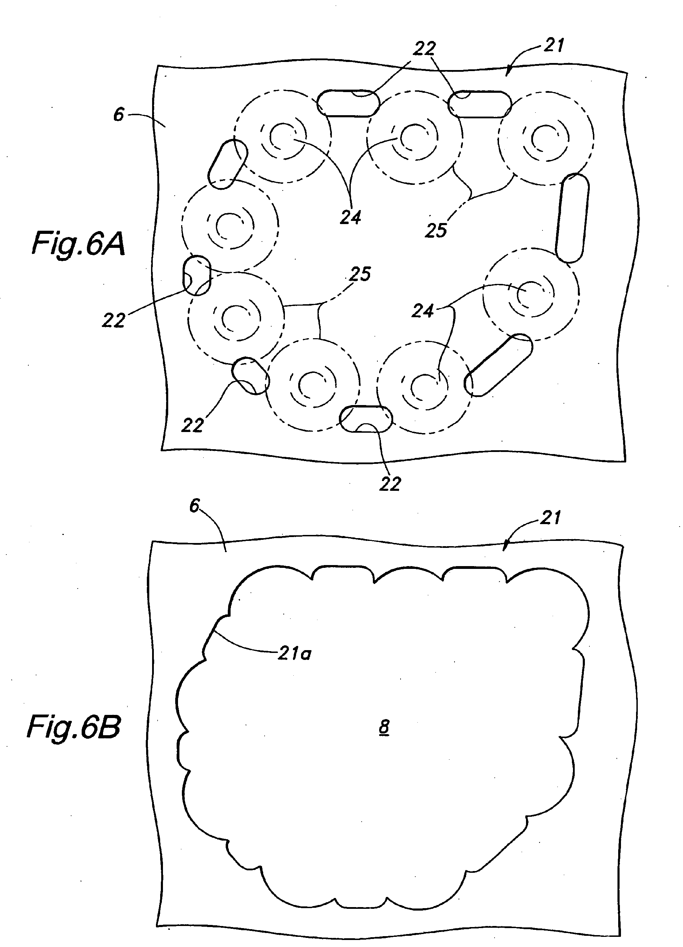

Figures 6A and 6B illustrate the procedure for forming the opening 8 in the opening forming part 21 of the rear panel 6. First of all, using the dimples 24 as a guide for a hole opening tool such as a drill, a hole saw, a punch and the like, drill holes 25 are formed in the opening forming part 21 as indicated by the imaginary circular lines centered around the dimples 24 in Figure 6A. The drill holes 25 are dimensioned and positioned so as to overlap with the adjacent slots 22. Therefore, the slots 22 are completely connected with one another by the drill holes 25 and the opening 8 is formed as illustrated in Figure 6B after the piece of sheet metal surrounded by the drill holes 25 and slots 22 is removed.

By thus using the dimples 24 as a guide for forming the drill holes 25, the opening 8 can be made without any difficulty even on a vehicle body of a finished vehicle or when retrofitting a trailer hitch to a vehicle which is already in use. When the opening 8 is not required, the opening forming part 21 may be kept intact, and this contributes to the mechanical strength of the rear panel 6. In particular, as the slots 22 are relatively widely spaced from one another, the negative impact of these slots 22 to the mechanical strength of the rear panel 6 is minimized. If necessary, when the opening 8 is formed, a reinforcing measure may be taken as required by using any known reinforcing arrangement.

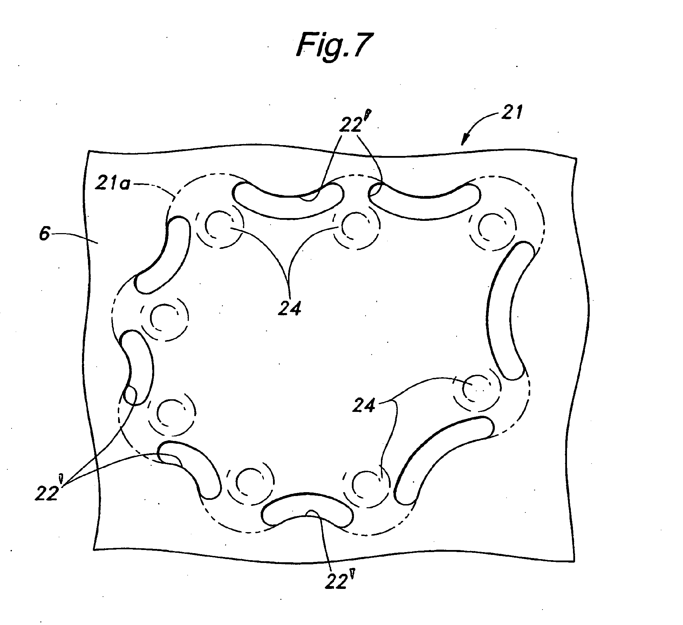

In the illustrated embodiment, each slot 22 was given with an elongated track shape, but slots may be given with other shapes as long as they may be connected with one another by drill holes formed around the dimples 24. In the modified embodiment illustrated in Figure 7, each slot 22' is given with the shape of a curved track or is kidney shaped so that the part of the edge of the opening 8 formed by the drill holes denoted with numeral 21 a may smoothly connect with the part of the edge of the opening 8 formed by the slots 22', and the overall edge of the opening 8 may be relatively free from ruggedness.

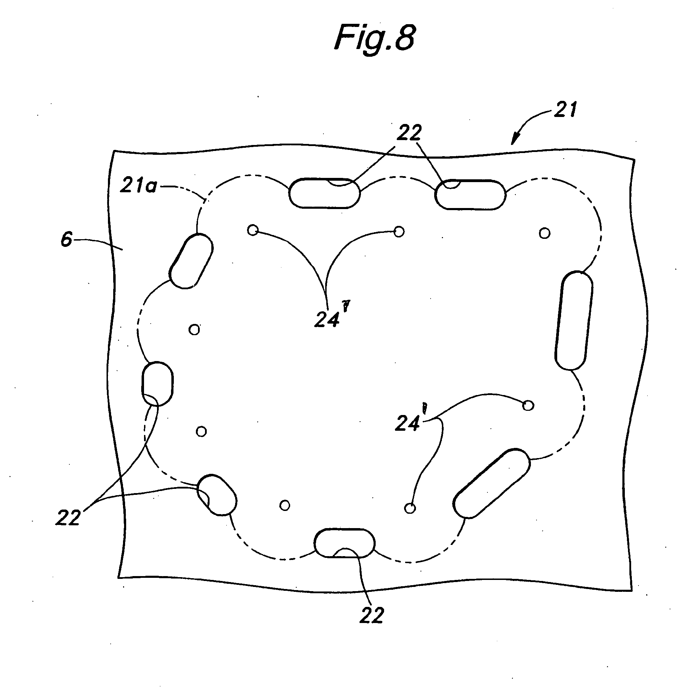

The dimples 24 in the illustrated embodiment each consisted of a semispherical recess (projection as seen from the opposite side of the rear panel 6), by may also consist of small holes 24' or slits passed through the rear panel 6 as illustrated in Figure 8 or dimples of other shapes as long as they can be used for centering a drill or other hole forming tools.

Also, the opening 8 may not be a complete opening in the rear panel 6, but may also consist of a cutout or notch which is cut out from a fringe part of the rear panel 6. Furthermore, the vehicle panel of the present invention is not limited to a rear panel or a part through which a trailer hitch is to be passed, but may consist of any other body panel part of a vehicle body through which an opening may be formed as an option.

## Claims

1. A vehicle body panel through which an opening (8) may be formed as an option, comprising:
a panel member (6) including a plurality of slots (22) arranged along an imaginary line (21a) defining the optional opening (8); and
a guide feature (24) for guiding a hole opening tool is provided between each selected pair of slots (22).

2. The vehicle body panel according to claim 1, wherein each slot (22) is given with an elongated track shape.

3. The vehicle body panel according to claim 1, wherein each slot (22') is given with an elongated curved track shape.

4. The vehicle body panel according to claim 1, wherein each guide feature (24) is provided inside the imaginary line (21a) defining the optional opening (8).

5. The vehicle body panel according to claim 1, wherein each guide feature comprises a dimple (24') formed in the panel member (6).

6. The vehicle body panel according to claim 1, wherein each guide feature comprises a hole or a slit formed in the panel member (6).

7. The vehicle body panel according to claim 1, wherein the panel member (6) comprises a rear panel (6), and the opening (8) provides an access for mounting a trailer hitch (11) to a side frame disposed in front of the rear panel (6).

## Patentansprüche

1. Fahrzeugaufbauplatte, durch die hindurch, als Option, eine Öffnung (8) ausgebildet werden kann, umfassend:
ein Plattenelement (6), das eine Mehrzahl von Schlitzen (22) enthält, die entlang einer die optionale Öffnung (8) definierenden imaginären Linie (21 a) angeordnet sind; und
ein Führungsmerkmal (24) zum Führen eines Lochöffnungswerkzeugs zwischen jedem gewählten Paar von Schlitzen (22) vorgesehen ist.

2. Fahrzeugaufbauplatte nach Anspruch 1, worin jeder Schlitz (22) eine langgestreckte Bahnform hat.

3. Fahrzeugaufbauplatte nach Anspruch 1, worin jeder Schlitz (22') eine langgestreckte gekrümmte Bahnform hat.

4. Fahrzeugaufbauplatte nach Anspruch 1, worin jedes Führungsmerkmal (24) innerhalb der die optionale Öffnung (8) definierenden imaginären Linie (21) vorgesehen ist.

5. Fahrzeugaufbauplatte nach Anspruch 1, worin jedes Führungsmerkmal eine in dem Plattenelement (6) ausgebildete Delle (24') aufweist.

6. Fahrzeugaufbauplatte nach Anspruch 1, worin jedes Führungsmerkmal ein Loch oder einen Schlitz aufweist, das/der in dem Plattenelement (6) ausgebildet ist.

7. Fahrzeugaufbauplatte nach Anspruch 1, worin das Plattenelement (6) eine Heckplatte (6) aufweist, und die Öffnung (8) einen Zugang zum Anbringen einer Anhängerkupplung (11) an einem vor der Heckplatte (6) angeordneten Seitenrahmen bietet.

## Revendications

1. Panneau de carrosserie de véhicule à travers lequel une ouverture (8) peut être formée en option, comprenant :
un élément de panneau (6) comprenant une pluralité de fentes (22) agencées le long d'une ligne imaginaire (21a) définissant l'ouverture optionnelle (8) ; et
une caractéristique de guidage (24) pour guider un outil d'ouverture de trou prévue entre chaque paire sélectionnée de fentes (22).

2. Panneau de carrosserie de véhicule selon la revendication 1, dans lequel chaque fente (22) a la forme d'une piste allongée.

3. Panneau de carrosserie de véhicule selon la revendication 1, dans lequel chaque fente (22') a la forme d'une piste incurvée allongée.

4. Panneau de carrosserie de véhicule selon la revendication 1, dans lequel chaque caractéristique de guidage (24) est prévue à l'intérieur de la ligne imaginaire (21a) définissant l'ouverture optionnelle (8).

5. Panneau de carrosserie de véhicule selon la revendication 1, dans lequel chaque caractéristique de guidage comprend une empreinte (24') formée dans l'élément de panneau (6).

6. Panneau de carrosserie de véhicule selon la revendication 1, dans lequel chaque caractéristique de guidage comprend un trou ou une fente formé dans l'élément de panneau (6).

7. Panneau de carrosserie de véhicule selon la revendication 1, dans lequel l'élément de panneau (6) comprend un panneau arrière (6), et l'ouverture (8) fournit un accès pour le montage d'un attelage de remorque (11) sur un cadre latéral disposé devant le panneau arrière (6).
